Europäisches Patentamt

European Patent Office

Office européen des brevets

(11) Veröffentlichungsnummer: **0 302 082**
**B1**

(12) **EUROPÄISCHE PATENTSCHRIFT**

(45) Veröffentlichungstag der Patentschrift: **12.09.90**

(51) Int. Cl.⁵: **F 02 B 37/00, F 02 D 17/02**

(21) Anmeldenummer: **87906073.9**

(22) Anmeldetag: **23.09.87**

(86) Internationale Anmeldenummer:
**PCT/DE87/00432**

(87) Internationale Veröffentlichungsnummer:
**WO 88/06232 25.08.88 Gazette 88/19**

(54) **AUFGELADENE MEHRZYLINDRIGE HUBKOLBEN-BRENNKRAFTMASCHINE MIT MEHREREN PARALLEL ARBEITENDEN ABGASTURBOLADERN.**

(30) Priorität: **17.02.87 DE 3704967**

(43) Veröffentlichungstag der Anmeldung:
**08.02.89 Patentblatt 89/06**

(45) Bekanntmachung des Hinweises auf die Patenterteilung:
**12.09.90 Patentblatt 90/37**

(84) Benannte Vertragsstaaten:
**AT CH DE FR GB IT LI**

(56) Entgegenhaltungen:
**DE-A-3 101 623    GB-A-2 034 406**
**FR-A-1 290 767    GB-A-2 034 815**
**GB-A-2 030 646    GB-A-2 115 873**

**Patent abstracts of Japan, vol.9. no.111(M-379)(1834), 15.05.1985**

**Patent abstracts of Japan, vol.9. no.67(M-366)(1790) 27.03.1985**

**Patent abstracts of Japan, vol.9, no.42(M-359)(1765), 22.02.1985**

(73) Patentinhaber: **MTU MOTOREN- UND TURBINEN-UNION FRIEDRICHSHAFEN GMBH**
**Olgastrasse 75 Postfach 20 40**
**D-7990 Friedrichshafen 1 (DE)**

(72) Erfinder: **RUETZ, Georg**
**Widdum 2**
**D-7997 Immenstaad (DE)**

Courier Press, Leamington Spa, England.

**Beschreibung**

Die Erfindung bezieht sich auf eine aufgeladene mehrzylindrige Hubkolben-Brennkraftmaschine mit mehreren parallel arbeitenden Abgasturboladern gemäß dem Oberbegriff von Patentanspruch 1. Mit einer derartigen Anordnung wird eine dem Betriebszustand der Hubkolben-Brennkraftmaschine angepaßte optimale Ladeluftversorgung erreicht.

Aus der DE-PS 28 38 952 ist eine gattungsgemäße Hubkolben-Brennkraftmaschine bekannt, bei der jeder Zylinderreihe ein Abgasturbolader zugeordnet ist. Gegen Schmierölverluste sind am Laufzeug der Abgasturbolader sogenannte Sperrluftdichtungen angeordnet, die aus der Ladeluftleitung der Hubkolben-Brennkraftmaschine mit Druckluft versorgt werden. Bei Abschaltung der einen Zylinderreihe wird der zugehörige Abgasturbolader durch Sperren der Abgaszufuhr zur Turbine stillgesetzt. Die Luftversorgung der abgeschalteten, als Kompressor betriebenen Zylinder erfolgt entweder durch den stehenden Ladeluftverdichter hindurch oder über zusätzliche Ansaugventile an den Zylindern direkt aus der Umgebung. Bei diesem Betriebszustand ist im Ladeluftverdichter des abgeschalteten Abgasturboladers und in der Ladeluftleitung der abgeschalteten Zylinder kein positiver Ladeluftdruck vorhanden. Es fehlt damit der für die Funktionsfähigkeit der Sperrluftdichtungen notwendige Überdruck. Die Schmierölversorgung ist während der zeitweisen Stillsetzung des Abgasturboladers nicht unterbrochen. Bei fehlendem Sperrluftdruck tritt Schmieröl durch die Sperrluftdichtungen aus. Das Lecköl sammelt sich als Lache im Spiralgehäuse von Abgasturbine und Ladeluftverdichter des stillgesetzten Abgasturboladers. Beim Zuschalten des Abgasturboladers wird die Lecköllache aus dem Spiralgehäuse des Ladeluftverdichters vom Ladeluftstrom in die Ladeluftsammelleitung gerissen, was zu betriebsgefährdender Überhitzung in den zugeordneten Zylinder führt. An der Abgasturbine austretendes Lecköl führt zu Verkokung und zu unkontrolliertem Abgasbrand mit betriebsgefährdenden Schäden am Laufrad und der Auspuffanlage.

Es ist deshalb Aufgabe der Erfindung, eine Hubkolben-Brennkraftmaschine zu schaffen, bei der in Betriebszeiten mit geringer Teillast auch nach Abschaltung von Abgasturboladern und Abschaltung von einigen Zylindern in der Ladeluftsammelleitung ein über dem Umgebungsluftdruck liegender Druck aufrechterhalten bleibt.

Diese Aufgabe wird erfindungsgemäß mit den kennzeichnenden Merkmalen von Patentanspruch 1 gelöst. Die weitere Ausgestaltung der Erfindung ergibt sich mit den Merkmalen der Patentansprüche 2 und 5.

Die mit der Erfindung erzielten Vorteile bestehen insbesondere darin, daß durch Abkoppelung der Luftversorgung für die abgeschalteten Zylinder der Luftmassendurchsatz des nicht abschaltbaren Abgasturboladers einen Betrieb im optimalen Betriebsbereich und erhöhtem Druckverhältnis ergibt, daß bei Leerlauf und Teillast ein über dem Umgebungsluftdruck liegender Ladeluftdruck im Ladeluftleitungssystem erzielt wird, daß während der Betriebszeiten mit abgeschalteten Zylindern auch der Ladeluftverdichter des abgeschalteten Abgasturboladers infolge der saugseitig angeordneten Absperrvorrichtung mit dem im Ladeluftleitungssystem herrschenden Ladeluftdruck beaufschlagt ist, daß durch den erhöhten Ladeluftdruck die Sperrluftdichtungen am Laufzeug beider Abgasturbolader ausreichend mit Druckluft versorgt werden, was Schmierölaustritte in die Spiralgehäuse verhindert und daß mit der verbesserten Ladeluftversorgung der nicht abgeschalteten Zylinder der Betrieb der Hubkolben-Brennkraftmaschine bei Leerlauf und im Teillastbereich verbessert ist.

Ausführungsbeispiele der Erfindung sind in den Zeichnungen schematisch dargestellt und werden nachstehend näher beschrieben. Es zeigen:

Fig. 1 Aufgeladene Brennkraftmaschine mit zwei Zylinderreihen und zwei parallel arbeitenden Abgasturboladern;

Fig. 2 bis 4 Anordnungsvarianten des absperrbaren Ladeluftleitungsabschnittes der abschaltbaren Zylinder.

Eine Hubkolben-Brennkraftmaschine besteht aus zwei Gruppen von Zylindern 11 und 12, die aus einer Ladeluftsammelleitung 19 durch je einen Ladeluftleitungsabschnitt 13, 14 mit vorverdichteter Ladeluft versorgt werden. Den Zylindergruppen 11 bzw. 12 sind Abgasleitungsabschnitte 15, 16 zugeordnet, die in eine Abgassammelleitung 34 münden. Die Ladeluftversorgung erfolgt durch zwei an der Hubkolben-Brennkraftmaschine angeordnete, parallel arbeitende Abgasturbolader 17, 18, die jeweils aus einer Abgasturbine 25 bzw. 26 und einem Ladeluftverdichter 24 bzw. 27 bestehen.

Der Abgasturbolader 18 ist durch eine in der Abgasleitung 39 angeordnete, steuerbare Absperrvorrichtung 30 ab- und zuschaltbar ausgebildet. Bei Betriebszeiten mit vermindertem Abgasangebot der Hubkolben-Brennkraftmaschine erfolgt bei abgeschaltetem Abgasturbolader 18 die Ladeluftversorgung allein durch den Abgasturbolader 17. Damit während der Abschaltung des Abgasturboldaders 18 durch den Ladeluftverdichter 27 hindurch keine Ladeluft entweichen kann, ist in der Ladeluftsaugleitung 36 eine selbsttätig schließende Absperrvorrichtung 37 angeordnet.

Die Abgasturbinen 25, 26 sind eintrittsseitig über die Abgasleitungen 38, 39 an die Abgassammelleitung 34 und austrittsseitig an die Auspuffleitung 31 angeschlossen.

Die Ladeluftverdichter 24, 25 sind an die Ladeluftsaugleitungen 35 bzw. 36 angeschlossen und fördern verdichtete Ladeluft über Leitungen 20, 21 und Ladeluftkühler 22, 23 in die Ladeluftsammelleitung 19. An jedem der drucölgeschmierten Abgasturbolader 17, 18 sind am Laufzeug Sperrluftdichtungen gegen Schmierölverluste angeordnet, die jeweils über eine Leitung 28 bzw. 29 mit Druckluft aus der Ladeluftleitung 20 bzw. 21 versorgt werden.

Durch eine nicht weiter dargestellte Einrichtung zum Unterbrechen der Brennstoffzufuhr werden die Zylinder 12 bei Leerlauf und bei Teillast abgeschaltet und laufen ohne Leistungsabgabe mit. Da die Ventilsteuerzeiten bei den abgeschalteten Zylindern 12 nicht verändert sind, findet im abgeschalteten Zustand ein Ladungswechsel von Luft in den Zylindern 12 statt.

Bei Leerlauf und bei Teillast ist das Abgasangebot der Hubkolben-Brennkraftmaschine gering. Selbst bei abgeschaltetem Abgasturbolader 18 liefert das Abgasangebot zu wenig Antriebsleistung um mit dem Abgasturbolader 17 ein über dem Umgebungsluftdruck liegenden Ladedruck zu erzeugen, wenn auch der Luftmassenbedarf der abgeschalteten Zylinder 12 durch den Ladeluftverdichter 24 mitgedeckt werden muß.

Bei zu niedrigem oder fehlendem Ladeluftdruck sind die Sperrluftdichtungen am Laufzeug beider Abgastruboloader 17, 18 nicht mehr funktionsfähig, so daß Schmieröl durch die Sperrluftdichtungen hindurchtreten kann.

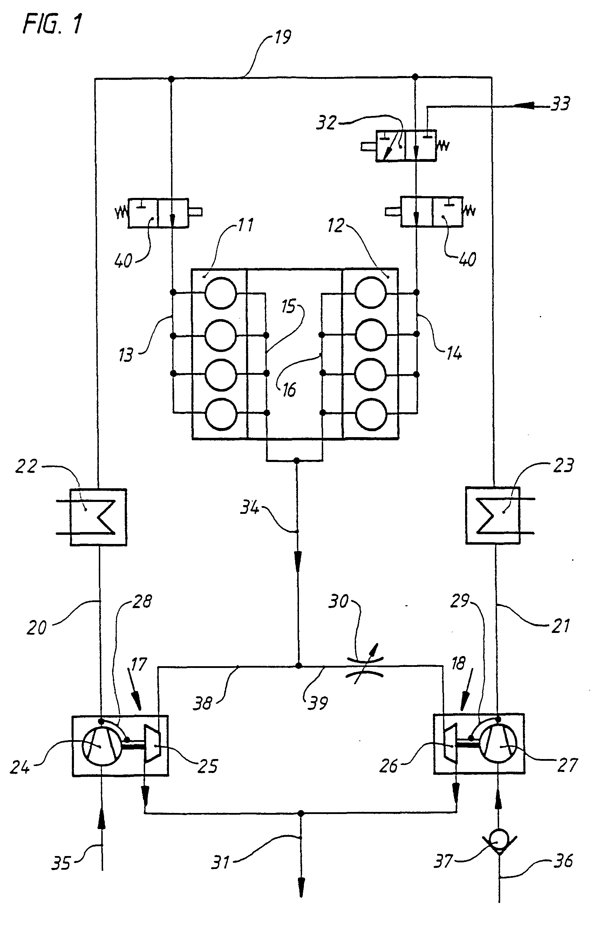

Abhilfe schafft eine gemäß Fig. 1 zwischen Ladeluftsammelleitung 19 und Ladeluftleitungsabschnitt 14 der abgeschalteten Zylinder 12 angeordnete Umschaltvorrichtung 32.

Bei Unterbrechung der Brennstoffzufuhr für die Zylinder 12 wird durch Betätigen der Umschaltvorrichtung 32, die Verbindung zwischen der Ladeluftsammelleitung 19 und dem Ladeluftleitungsabschnitt 14 unterbrochen. Gleichzeitig stellt die Umschaltvorrichtung 32 eine Verbindung zwischen dem Ladeluftleitungsabschnitt 14 und einer in die Umgebung mündenden Saugöffnung 33 her, die der Luftversorgung der abgeschalteten Zylinder 12 dient. Der zugeschaltete Abgasturbolader 17 ist dadurch auf der Verdichterseite vom Luftmassenbedarf der abgeschalteten Zylinder 12 entlastet. Die Abgasturbine 25 arbeitet jedoch mit einem Massendurchsatz der sich aus dem Gasdurchsatz der Zylinder 12 und dem Abgasmassenstrom der mit Brennstoff versorgten Zylinder 11 zusammensetzt. Der Verdichter 24 des Abgasturboladers 17 arbeitet mit der daraus resultierenden erhöhten Antriebsleistung in einem günstigen Betriebsbereich, so daß sich ein über dem Umgebungsdruck liegender Ladeluftdruck in den Ladeluftleitungen 13, 19, 20, 21 einstellt.

Damit ist immer ein für die Wirksamkeit der Sperrluftdichtungen ausreichender Überdruck vorhanden.

In jedem Ladeluftleitungsabschnitt 13, 14 ist eine Sicherheits-Schnellabsperrvorrichtung 40 angeordnet, die im Gefahrenfall zur raschen Stillsetzung der Hubkolben-Brennkraftmaschine geschlossen wird. Die Umschaltvorrichtung 32 ist der Sicherheits-Schnellabsperrvorrichtung 40 im Ladeluftleitungsabschnitt 14 in Strömungsrichtung der Ladeluft vorgeschaltet.

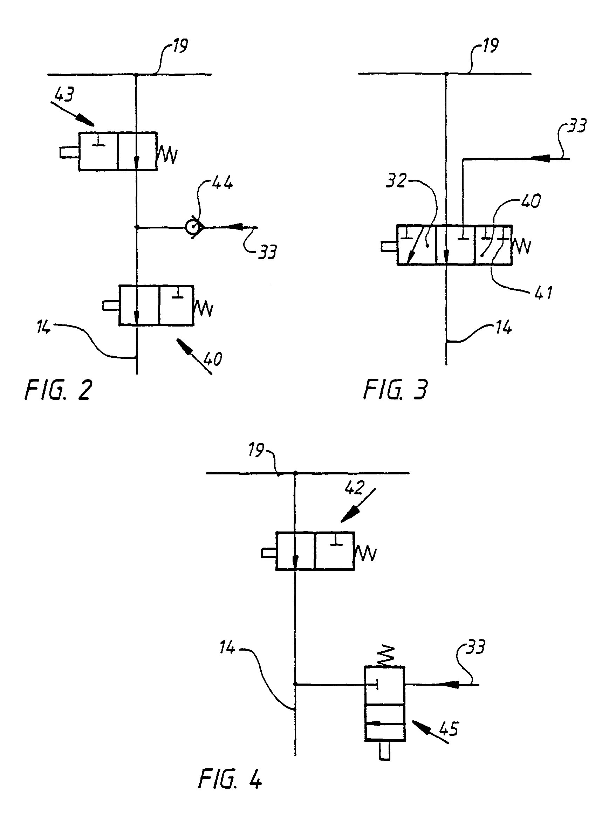

Nach Fig. 2 sind die steuerbare Vorrichtung 43 und die Saugöffnung 33 als voneinander unabhängige Bauelemente ausgebildet. Der Saugöffnung 33 ist dabei ein Rückschlagventil 44 zugeordnet, das bei Durchgangsstellung der Vorrichtung 43 vom herrschenden Ladeluftdruck geschlossen gehalten wird und sich bei Abschaltbetrieb der Zylinder 12 öffnet.

Gemäß Fig. 3 sind Umschaltvorrichtung 32 und Sicherheit-Schnellabsperrvorrichtung 40 als Kombinationsgerät ausgebildet. Bei der Schnellabsperrstellung wird auch der Durchgang der Saugöffnung 33 zum Ladeluftleitungsabschnitt 14 durch eine Sperre 41 geschlossen.

Bei der Variante nach Fig. 4 sind die Vorrichtung zum Sperren des Ladeluftleitungsabschnittes 14 und die Sicherheits-Schnellabsperrvorrichtung zu einer Umschaltvorrichtung 42 kombiniert. Bei diesem Ausführungsbeispiel ist es erforderlich, den Durchgang von der Saugöffnung 33 zum Ladeluftleitungsabschnitt 14 durch eine steuerbare Vorrichtung 45 absperrbar auszubilden. Die Saugöffnung 33 ist gesperrt, wenn die Schnellabsperrvorrichtung anspricht oder die Zylinder 12 mit Brennstoff versorgt werden.

## Patentansprüche

1. Aufgeladene mehrzylindrige Hubkolben-Brennkraftmaschine mit mehreren parallel arbeitenden Abgasturboladern, von denen mindestens einer ab- und zuschaltbar ausgebildet ist, wobei die Hubkolben-Brennkraftmaschine eine Einrichtung zum Unterbrechen der Brennstoffzufuhr zu einigen der Zylinder bei Leerlauf oder bei Teillastbetrieb aufweist und die Zylinder, die durch Unterbrechung der Brennstoffzufuhr abgeschaltet mitgeschleppt werden, eine von der Ladeluftversorgung der übrigen Zylinder unabhängige Luftzufuhr aufweisen, dadurch gekennzeichnet, daß für alle parallel arbeitenden Abgasturbolader (17, 18) eine gemeinsame Ladeluftsammelleitung (19) angeordnet ist, daß jeder zu- und abschaltbare Abgasturbolader (18) auf der Saugseite des Ladeluftverdichters (27 ein Rückschlagventil (37) aufweist, daß der den abschaltbaren Zylindern (12) zugehörige Ladeluftleitungsabschnitt (14) durch eine steuerbare Vorrichtung (43) von der Ladeluftsammelleitung (19) absperrbar ausgebildet ist und daß für die Luftzufuhr zu den abschaltbaren Zylindern (12) am zugehörigen Ladeluftleitungsabschnitt (14) eine Saugöffnung (33) angeordnet ist.

2. Aufgeladene Hubkolben-Brennkraftmaschine nach Anspruch 1, dadurch gekennzeichnet, daß die steuerbare Vorrichtung (43) und die Saugöffnung (33) zusammengefaßt als Umschaltvorrichtung (32) ausgebildet sind.

3. Aufgeladene Hubkolben-Brennkraftmaschine nach Anspruch 2, dadurch gekennzeichnet, daß die Umschaltvorrichtung (32) mit einer im Ladeluftleitungsabschnitt (14) angeordneten Sicherheits-Schnellabsperrvorrichtung (40) zusammengefaßt ausgebildet ist.

4. Aufgeladene Hubkolben-Brennkraftmaschine nach Anspruch 2, dadurch gekennzeichnet, daß eine im Ladeluftleitungsabschnitt (14) angeordnete Sicherheits-Schnellabsperrvorrichtung (42) mit einer zusätzlichen Betätigungsmöglichkeit während Betriebszeiten mit Zylinderund Abgasturboladerabschaltung ausgebildet ist.

5. Aufgeladene Hubkolben-Brennkraftmaschine nach Anspruch 4, dadurch gekennzeichnet, daß die Saugöffnung (33) steuerbar ausgebildet ist.

## Revendications

1. Moteur à combustion interne suralimenté à plusieurs cylindres, comportant plusieurs turbocompresseurs à gaz d'échappement montés en parallèle, dont l'un au moins peut être arrêté et remis en service, ce moteur comportant un dispositif destiné à couper l'alimentation en carburant de certains de ces cylindres pendant la marche au ralenti ou sous charge partielle, et les cylindres qui sont mis simultanément hors service par la suppression de leur alimentation en carburant comportant une alimentation en air indépendante de l'alimentation en air de suralimentation des autres cylindres, moteur caractérisé en ce qu'une tubulure principale (19) d'air de suralimentation est commune à tous les turbocompresseurs (17, 18) à gaz d'échappement fonctionnant en parallèle; en ce que chacun des turbocompresseurs (18) à gaz d'échappement qui peuvent être arrêtés et mis en service comporte, du côté d'aspiration de son compresseur (27), une soupape (37) d'arrêt; en ce que la branche (14) de la tubulure d'air de suralimentation, associée aux cylindres (12) pouvant être mis hors service, peut être isolée, par un dispositif (43) manoeuvrable, de la tubulure principale (19) de suralimentation; et en ce qu'un orifice (33) d'aspiration est disposé sur la branche (14) correspondante du conduit d'air de suralimentation pour alimenter en air ces cylindres (12) hors service.

2. Moteur suralimenté selon la revendication 1, caractérisé en ce que le dispositif (43) manoeuvrable et l'orifice (33) d'aspiration sont combinés en un dispositif inverseur (32).

3. Moteur suralimenté selon la revendication 2, caractérisé en ce que le dispositif inverseur (32) est combiné avec un dispositif (40) de sécurité à fermeture rapide, disposé dans la branche (14) de la tubulaire d'air de suralimentation.

4. Moteur suralimenté selon la revendication 2, caractérisé en ce qu'un dispositif (42) de sécurité, à fermeture rapide, disposé dans la branche (14) de la tubulure de suralimentation, présente une possibilité de manoeuvre supplémentaire pendant les périodes de fonctionnement durant lesquelles des cylindres et des turbocompresseurs à gaz d'échappement sont hors service.

5. Moteur suralimenté selon la revendication 4, caractérisé en ce que la communication avec l'orifice (33) d'aspiration est réglable (c'est-à-dire que la communication avec cet orifice peut être coupée).

## Claims

1. A supercharged multicylinder reciprocating internal-combustion engine with a plurality of exhaust-driven turbochargers operating in parallel, at least one of which is designed to be cut in and out, wherein the reciprocating internal-combustion engine has a means for interrupting the fuel supply to some of the cylinders under no-load or under partial-load operation and the cylinders, which by interruption of the fuel supply are entrained therewith in a cut-off state, have an air supply independent of the air-charge supply to the remaining cylinders, characterised in that for all the exhaust-driven turbochargers (17, 18) operating in parallel a common air-charge manifold (19) is provided, in that each exhaust-driven turbocharger (18) which can be cut in and out has a non-return valve (37) on the intake side of the aircharge compressor (27), in that the air-charge duct portion (14) associated with the cylinders (12) which can be cut off can be shut off from the air-charge manifold (19) by a controllable device (43), and in that an intake port (33) for the air supply to the cylinders (12) which can be cut off is provided in the associated air-charge duct portion (14).

2. A supercharged multicylinder reciprocating internal-combustion engine according to Claim 1, characterised in that the controllable device (43) and the intake port (33) are combined to form a switching device (32).

3. A supercharged multicylinder reciprocating internal-combustion engine according to Claim 2, characterised in that the switching device (32) is combined with a safety rapid shut-off device (40) disposed in the air-charge duct portion (14).

4. A supercharged multicylinder reciprocating internal-combustion engine according to Claim 2, characterised in that a safety rapid shut-off device (42) disposed in the air-charge duct portion (14) is provided with an additional possibility of actuation during operating periods in which both cylinders and exhaust-driven turbochargers are cut out.

5. A supercharged multicylinder reciprocating internal-combustion engine according to Claim 4, characterised in that the intake port (33) is controllable.

EP 0 302 082 B1

FIG. 1

1

FIG. 2

FIG. 3

FIG. 4